# EUROPÄISCHE PATENTSCHRIFT

(11) **EP 0 526 596 B1**
(45) Veröffentlichungstag und Bekanntmachung des Hinweises auf die Patenterteilung: **17.05.1995**
(21) Anmeldenummer: 91920830.6
(22) Anmeldetag: 02.12.1991
(51) Int. Cl.: F04B 17/00, H02K 7/14, H02K 23/66, H02K 5/167

(54) **ELEKTROMOTOR MIT ANGESETZTER PUMPE**
ELECTRIC MOTOR WITH FIT-ON PUMP
MOTEUR ELECTRIQUE AVEC POMPE ASSOCIEE

(30) Priorität: 21.02.1991 DE 4105349
(43) Veröffentlichungstag der Anmeldung: 10.02.1993
(73) Patentinhaber: ITT Automotive Europe GmbH, 60488 Frankfurt am Main (DE)
(72) Erfinder: BRUHN, Rainer, D-7500 Karlsruhe 21 (DE)
(86) Internationale Anmeldenummer: EP9102272
(87) Internationale Veröffentlichungsnummer: WO9214927

(56) Entgegenhaltungen:
- FR-A- 2 644 520
- Patent Abstracts of Japan, Band 6, Nr. 150 (M-148), 10. Juli 1982; & JP, A, 57068590 (NIKKISO) 26. April 1982, siehe Zusammenfassung
- Patent Abstracts of Japan, Band 10, Nr. 174 (M-490), 19. Juni 1986; & JP, A, 61023890 (TOSHIBA) 1. Februar 1986, siehe Zusammenfassung

## Beschreibung

Die Erfindung betrifft einen mit einer Pumpe verbundenen Elektromotor, wobei das Gehäuse der Pumpe eine zylindrische Einsteckaufnahme für einen darin eingreifenden zapfenförmigen Ansatz des Motorgehäuses aufweist und wobei außerdem dieser Ansatz das pumpenseitige erste Lager des Motorankers spielfrei aufnimmt und eine Durchtrittsöffnung für die Ankerwelle aufweist.

Solche Einheiten aus Pumpe und elektrischem Antriebsmotor sind an sich bereits bekannt. Es sei verwiesen auf die EP 387506 A1. Ein spezielles Anwendungsgebiet ist die Bremsanlage eines Kraftfahrzeugs und dort speziell eines sogenannten Antiblockiersystems für die Bremsen des Fahrzeug. Im letzteren Fall handelt es sich bei der Pumpe meist um eine Radialkolben-Flüssigkeitspumpe, die mittels eines Exzenters auf der Abtriebswelle eines Elektromotors angetrieben wird. Der bekannte Stand der Technik (EP 387506 A1) sieht die Verwendung eines aus Blech gefertigten Motorgehäuses vor. Üblicherweise ist dies mit einem Aluminiumflansch ausgestattet, der das Lager aufnimmt und dementsprechend bearbeitet werden muß. Außerdem ist im allgemeinen eine separate Bürstenhalteplatte erforderlich.

Die Aufgabe der Erfindung wird nun darin gesehen, das gesamte Motorgehäuse so weiterzubilden, daß ein paßgenauer Anschluß an die Pumpe und der Einbau des pumpenseitigen Lagers ohne besondere Bearbeitung in diesem Bereich möglich ist. Zur Lösung dieser Aufgabe wird erfindungsgemäß vorgeschlagen, daß bei einer gattungsgemäßen Einheit aus Elektromotor und von diesem angetriebener Pumpe gemäß dem Oberbegriff des Anspruch 1 das Gehäuse dieses Motors und der es verschließende Deckel gemäß dem kennzeichnenden Teil dieses Anspruchs ausgebildet sind. Der Boden dieses topfförmigen Gehäuses ist mit einer Ausstülpung versehen, welche den das erste Lager aufnehmenden Ansatz bildet und der paßgenau in die Aufnahme des Pumpengehäuses einsteckbar ist. Es ist nun erstmals möglich geworden, ein Motorgehäuse mit zapfenförmigem Ansatz als liefziehteil auszubilden, wobei letzteres sowohl außen als auch innen ohne Nachbearbeitung eine paßgenaue Zentrierung ermöglicht. Man kann also einerseits das pumpenseitige erste Lager ins Innere des zapfenförmigen Ansatzes einpressen und andererseits den Motor mit der Pumpe verbinden, wobei der zapfenförmige Ansatz paßgenau in die Aufnahme des Pumpengehäuses paßt. Der speziell gewählte Wandquerschnitt im Bereich des Mantels des zapfenförmigen Ansatzes gibt die notwendig Elastizität aber auch Stabilität, welche man für die äußere und innere Zentrierung und die sichere Verbindung sowie Halterung des ersten Lagers und auch der Pumpe benötigt.

Um eine gute Anlage des Pumpengehäuses am Motorgehäuse außerhalb des zapfenförmigen Ansatzes zu gewährleisten, sieht eine Weiterbildung der Erfindung vor, daß sich am Topfboden eine den Ansatz konzentrisch umgebende, nach außen ragende ringförmige Sicke mit etwa diametral gegenüberliegenden integrierten Befestigungsaugen befindet, wobei die gesamte Ausprägung eine ebene Anflanschfläche für das Pumpengehäuse bildet. Das Pumpengehäuse liegt also unmittelbar nur an dieser Anflanschfläche an, die nicht nur plan ist, sondern sich auch genau senkrecht zur Längsachse des Rotors erstreckt. In die Befestigungsaugen kann man sog. Montagepreßmuttern einsetzen, welche den Zusammenbau von Motor und Pumpe besonders einfach machen. Man kann aber auch Gewinde direkt am Motorgehäuse ausbilden.

Eine weitere Ausgestaltung der Erfindung ergibt sich aus Anspruch 4. Die dort erwähnte Topfboden-Außenfläche ist gemäß diesem Anspruch gegenüber der Anflanschfläche etwas zurückgesetzt. Die Nut des Topfbodens ermöglicht einerseits die Verwendung eines relativ großen Radius am Übergang vom Topfboden zum Ansatz, und andererseits bildet sie in Verbindung mit der zugekehrten Fläche des Pumpengehäuses sowie der ebenen Anflanschfläche einen umlaufenden Kanal, welcher ggf. Leckageflüssigkeit aufnehmen kann. Hierzu trägt auch die Ausbildung gemäß Anspruch 5 bei.

Eine besonders bevorzugte, im Anspruch 6 beschriebene Ausführungsform der Erfindung gewährleistet, daß beim Auftreten einer Leckageflüssigkeit diese auch nach außen hin abfließen kann. Sie strömt über den Zwischenraum zwischen den dort erwähnten C-Schenkelenden in Gebrauchslage nach unten hin ab, weil einerseits die C-Schenkelenden dabei nach unten weisen und andererseits der Nutgrund und der Grund des Abflußkanals vorzugsweise in der gleichen Vertikalebene liegen.

Hier macht sich im übrigen die besondere Formgebung des zapfenförmigen Ansatzes vorteilhaft bemerkbar, da sie axiale Abströmkanäle schafft, wenn eine dichte Verbindung dieses Ansatzes mit der Aufnahme der Pumpe vermieden werden soll. über die Abströmkanäle kann bei einer Undichtigkeit der Pumpe das aus ihr austretende Hydrauliköl abfließen. Die durch die Rillen der wellenartigen oder mäanderartigen Kontur und die Aufnahme des Pumpengehäuses gebildeten Abflußkanäle stehen in unmittelbarer Strömungsverbindung mit der Umfangsnut des Pumpengehäuses. Hier wirkt sich des weiteren vorteilhaft aus, daß der Topfboden des Motorgehäuses einstückig mit dem Mantel des letzteren und dem Ansatz gefertigt ist, so daß in diesem Bereich keine Dichtungsprobleme auftreten. Wird gerade eine Dichtheit gefordert, bildet man den Ansatz vorzugweise im an den Topfboden anschließenden Drittel rund aus, so daß in diesem Bereich eine Dichtung um den Ansatz herumgelegt werden kann.

Eine weitere Variante der Erfindung ist Anspruch 8 entnehmbar. Wenn das darin erwähnte zweite Lager der Motors außen ballig gestaltet ist, so hat die erste Aufnahme im Deckel eine dementsprechende Gestalt, soweit sie das Lager umfaßt. Die rohrförmige zweite Aufnahme des Deckels ist außen vorzugsweise geschlossen. Der Stützring befindet sich zwischen dem zweiten Lager und dem Kommutator des Ankers. Er kann mit einem axial vorstehenden, dem Kommutator zugeordneten bzw. an diesem bei der Montage anlegbaren Bund ausgestattet sein. Weil er bei losem Deckel die inneren Mündungen der Radialkanäle des Deckels verschließt, hält er die unter Federdruck stehenden Kohlen in den Radialkanälen zurück. In dem Maße, in dem der Stützring beim Zusammenbau des Motors zur Seite geschoben wird, tritt der Kommutator vor die inneren Mündungen der Radialkanäle, so daß die Kohlen, wenn sie vom Stützring freigegeben werden, unmittelbar am Kommutator zur Anlage kommen. Der Stützring ist somit eine ideale Voraussetzung für eine automatische Blindmontage dieses Motors. Er steht, in radialer Richtung gesehen, vorzugsweise etwas weiter vor, zumindest im Bereich der inneren Mündungen der Kanäle, so daß der Kommutator nach der Montage von diesen inneren Mündungen einen geringen Abstand hat. Die Kohlen können nach Freigabe durch den Stützring um den Betrag dieses Spaltes radial verschoben werden, bis sie am Kommutator auftreffen. Aus dem Vorstehenden sowie daraus, daß der Deckel vorzugsweise aus wärmestabilem Kunststoff gespritzt ist und alle notwendigen Besonderheiten angeformt werden können, ergibt sich natürlich auch die Tatsache, daß auf eine separate Kohlenhalteplatte hier verzichtet werden kann. Dies führt ebenso wie die erleichterte Montage zur Vereinfachung und zur preiswerteren Herstellung dieses Motors.

Der Stützring bildet in weiterer Ausgestaltung der Erfindung in der Verschiebe-Endlage ein kommutatorseitiges axiales Stützglied für den Anker, wenn er gemäß Anspruch 9 in der Verschiebe-Endlage mittels Preßsitz in der zweiten Aufnahme des Deckels gehalten ist. Ein durch eine Lagerbuchse im Motortopf gelagerter Anker kann sich daran direkt oder indirekt unter Zwischenschaltung eines Rings oder dgl. abstützen.

Eine andere bevorzugte Ausführungsform der Erfindung ist in Anspruch 10 beschrieben. Die Verwendung des darin erwähnten Sensors ist insbesondere beim genannten Anwendungsgebiet von Motor und Pumpe zumindest vorteilhaft. Wenn man den Deckel aus Kunststoff fertigt, so kann man den leistenartigen Ansatz einstückig daran anformen. Es entsteht also insoweit kein Montagemehraufwand.

Eine Weiterbildung der Erfindung ist dadurch gekennzeichnet, daß der Sensor einen aus einem ebenen ausgestanzten Blechteil gefertigen Spulenkörper aufweist, der mit zwei einstückigen ersten Anschlußlappen fur den Sensor und mit zwei zweiten Anschlußläppen für die elektrische Verbindung mit den beiden Spulenenden versehen ist. Diese Ausbildung des Spulenkörpers ermöglicht eine Serienfertigung, indem man im laktverfahren aus einem Blechband die Spulenkörper ausstanzt. Soweit Formänderungen notwendig sind, kann man diese im gleichen laktverfahren unmittelbar oder in einem Folgewerkzeug anbringen.

Selbstverständlich kann man die Spule nicht unmittelbar am Blechteil anbringen, vielmehr ist es erfoderlich, daß gemäß einer weiteren Ausgestaltung der Erfindung der die Spule aufnehmende leilbereich des ausgestanzten Blechteils mit einer Kunststoffummantelung versehen ist, welche die ersten und zweiten Anschlußlappen frei läßt. Diese Ummantelung muß an das Blechteil so angepaßt werden, daß der Draht beim Wickeln der Spule nicht beschädigt werden kann und auch ein elektrischer Kontakt mit dem Spulenkörper sicher ausgeschlossen wird. Eine elektrisch leitende Verbindung gibt es lediglich an den zweiten Anschlußlappen, von denen der eine mit dem einen Drahtende der Spule und der andere mit dem andern Ende der Drahtspule elektrisch leitend verbunden wird, wobei diese Verbindung bspw. durch Lötzinn gesichert werden kann.

Eine vorteilhafte Ausbildung der Kunststoffummantelung ist in Anspruch 14 beschrieben. Man kann hierzu ein gespritztes Kunststoffteil verwenden, welches durch Falten um den Bereich des Spulenkörpers herumgelegt wird, der elektrisch isoliert werden muß. Das Zusammenfalten und damit das Anbringen des Kunststoffteils am Spulenkörper ist in vorteilhafter Weise dadurch leicht möglich, daß es gemäß Anspruch 16 ausgebildet ist. Das Umbiegen wird dann besonders einfach, wenn man die Wandstärke zwischen den beiden Klappachsen geringer hält als die übrige Wandstärke und auch eine Verkürzung des Bauteils im Bereich der Klappachsen vornimmt, und zwar in Längsrichtung der letzteren gesehen.

Eine weitere Variante der Erfindung besteht darin, daß eine Hälfte des Kunststoffteils zumindest im Bereich der Wicklung mit einem Distanzrand versehen ist, dessen Höhe etwa der Blechdicke des Spulenkörpers entspricht. Er gewährleistet eine Erhöhung der elektrischen Sicherheit. Jede Hälfte des Kunststoffteils weist in zweckmäßiger Art eine etwa H-förmige Gestalt auf, wobei der H-Quersteg die Spule aufnimmt. Diese Form kommt der Herstellung insbesondere der Spule sehr zugute.

Wenn der Spulenkörper aus einem einzigen Blechteil besteht, an dem die beiden Anschlüsse bzw. Stecker für den Sensor und auch für die beiden Spulenenden angebracht sind, so muß man zu einem geeigneten Zeitpunkt des Herstellungsverfahrens dafür sorgen, daß die beiden ersten und zweiten Anschlüsse elektrisch getrennt werden. Wie dies in vorteilhafter Art gemacht werden kann, beschreibt indirekt Anspruch 19. Die darin erwähnten beiden Stege, welche die mechanische Verbindung der beiden Stücke des Blechteils bewirken, müssen im Verlaufe des Herstellungsverfahrens durchtrennt bzw. entfernt werden. Zweckmäßigerweise erfolgt dies hinsichtlich eines der Stege gemäß Anspruch 20. Bezüglich des zweiten Stegs gibt Anspruch 22 eine Lösung an.

In Anspruch 21 wird eine weitere Ausgestaltung der Erfindung beschrieben, welche Voraussetzung für die Durchtrennung des zweiten Stegs nach Anspruch 22 ist.

Eine weitere bevorzugte Ausführungsform der Erfindung ergibt sich aus Anspruch 23. Aufgrund der in den Deckel integrierten Steckdose oder dgl. ergibt sich einerseits eine weitere Vereinfachung des Motors und andererseits eine dauer- und vorteilhafte Möglichkeit zum Anschließen des Sensors an eine Überwachungseinrichtung. Die Anschlußlappen des Sensors können auch direkt als Steckkontakte dienen.

Die Erfindung wird nachstehend anhand der Zeichnung näher erläutert. Die Zeichnung zeigt ein Ausführungsbeispiel der Erfindung. Hierbei stellen dar:
- Fig. 1: einen Längsschnitt durch den Motor mit schematisch angedeuteter Pumpe,
- Fig. 2: in der Seitenansicht und teilweise in Längsrichtung durchschnitten in verkleinertem Maßstab den Motor,
- Fig. 3: eine Draufsicht auf das linke Ende des Motors der Fig. 2,
- Fig. 4: eine Ansicht des rechten Motorendes,
- Fig. 5: in stark vergrößertem Maßstab ein Detail des Motorgehäuses im Bereich seines zapfenförmigen Ansatzes,
- Fig. 6: einen Längsschnitt durch den Stützring des Motors,
- Fig. 7: eine Stirnansicht des Stützrings,
- Fig. 8: eine Seitenansicht des Stützrings,
- Fig. 9: eine Draufsicht auf ein Blechband mit zwei hintereinander angeordneten ausgestanzten Spulenkörpern,
- Fig. 10: einen Halbschnitt in Längsrichtung des Spulenkörpers,
- Fig. 11: eine Draufsicht auf den Spulenkörper mit Kunststoffummantelung und Spule,
- Fig. 12: eine Seitenansicht der Fig. 11 in Längsrichtung,
- Fig. 13: eine Ansicht der Fig. 11 in Querrichtung,
- Fig. 14: eine Draufsicht auf die in eine Ebene ausgebreitete Kunststoffummantelung,
- Fig. 15: eine Seitenansicht der Fig. 14,
- Fig. 16: eine Draufsicht auf den fertigen Sensor,
- Fig. 17: eine Seitenansicht des Sensors.

Der Elektromotor 2 ist mit der Pumpe 1 über eine Steckverbindung paßgenau verbunden, so daß der am freien Ende der Abtriebswelle 3 angebrachte, insbesondere angeformte Exzenterzapfen 4, der vorzugsweise als Radialkolbenpumpe ausgebildeten Pumpe in verlangter Weise zugeordnet werden kann. Die Pumpe 1 besitzt in bekannter Weise eine Einsteckaufnahme 5 zur Aufnahme eines hohlen, zapfenförmigen Ansatzes 6 des Motorgehäuses 7. Im Inneren dieses Ansatzes 6 befindet sich das erste Lager 8 des Motorankers 9.

Um gleichzeitig eine Innenpassung für das erste Lager 8 und eine Außenpassung für den zapfenförmigen Ansatz in der Einsteckaufnahme 5 zu gewährleisten, ist der zapfenförmige Ansatz in ganz besonderer Weise gestaltet. Dies ermöglicht die Herstellung des Motorgehäuses mit dem daran angeformten zapfenförmigen Ansatz 6 als Blech-liefziehteil.

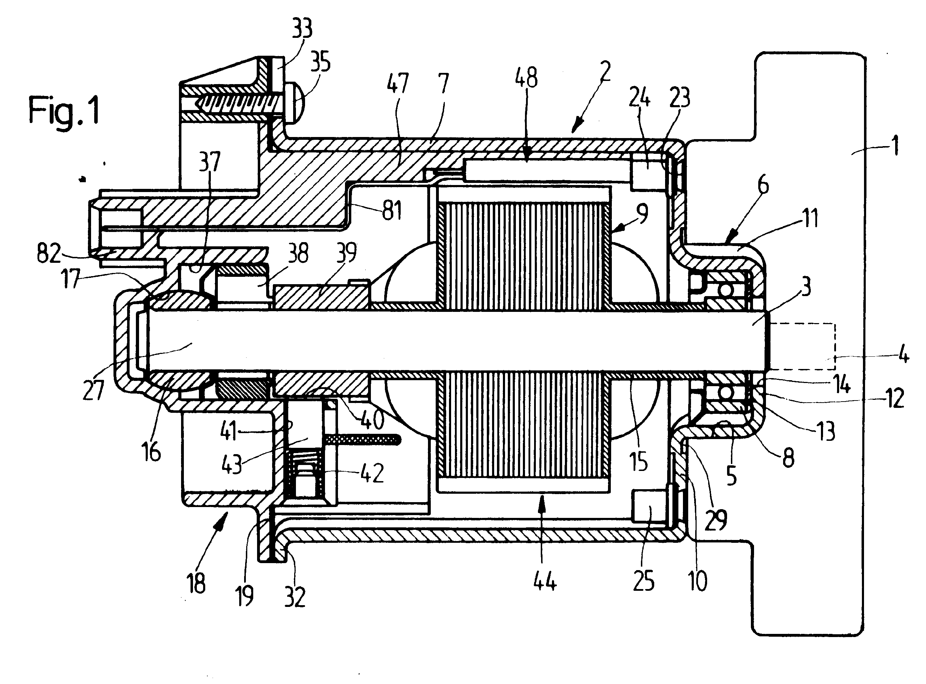

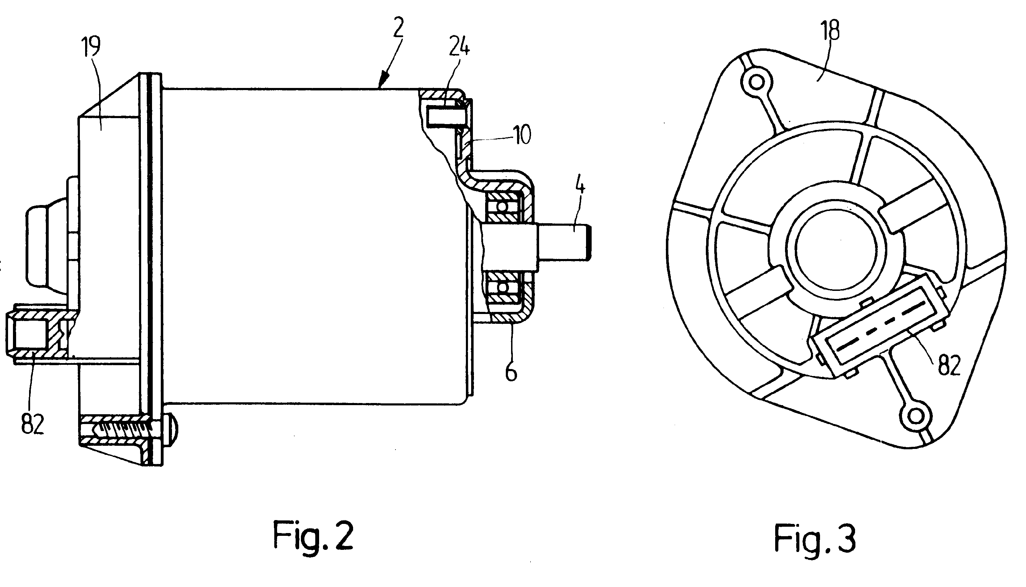

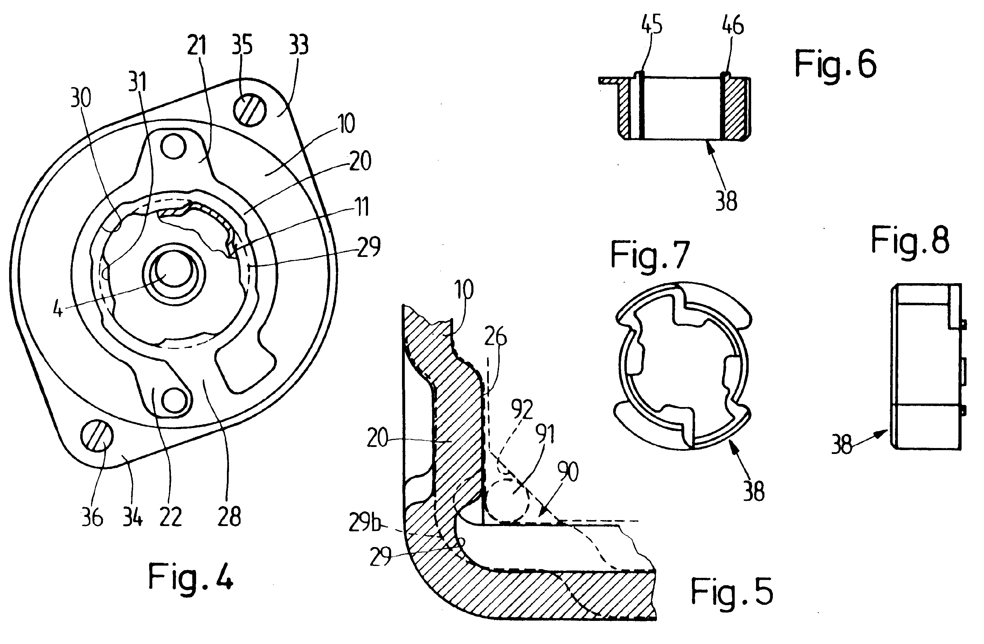

Wie man bspw. Fig. 1 oder 2 in Verbindung mit Fig. 4 entnehmen kann, ist der Wandquerschnitt des über den Topfboden 10 axial vorstehenden hohlen, zapfenförmigen Ansatzes 6 wellenartig, mäanderartig oder in ähnlicher Weise mit Längsrillen 11 versehen ausgebildet. Diese Formgebung des Ansatzes gewährleistet eine stramme, paßgenaue Verbindung zwischen Pumpe 1 und Elektromotor 2 einerseits und eine hierzu konzentrische, ebenso paßgenaue, den auftretenden Belastungen gewachsene Montage des ersten Lagers 8 im Inneren des hohlen, zapfenförmigen Ansatzes 6. Zwischen das als Wälzlager ausgebildete erste Lager 8 und den Boden 12 des seinerseits auch topfförmigen Ansatzes 6 mit der Durchtrittsbohrung 14 für die Abtriebswelle 3 kann noch eine Scheibe 13 geschaltet werden. Die axiale Fixierung erfolgt auf der anderen Seite mittels eines rohrförmigen Ansatzes 15 des Motorankers 9. Im übrigen befindet sich das zweite Lager 16 für die Anker- oder Abtriebswelle 3 des Motors in einer ersten Aufnahme 17 eines Deckels 18, welcher die pumpenabgewandte lopföffnung 19 des Motorgehäuses 7 verschließt.

Insbesondere den Fig. 4 und 5 entnimmt man, daß sich am Topfboden 10 des Motorgehäuses 7 eine den Ansatz 6 etwa konzentrisch umgebende, nach außen ragende, ringförmige Sicke 20 mit annähernd diametral gegenüberliegenden integrierten Befestigungsaugen 21 und 22 befindet. Die zugekehrte Fläche 23 der Pumpe 1 liegt also unmittelbar an dieser Sicke 20 an. In die Bohrung jedes Befestigungsauges ist eine Montagepressmutter 24 bzw. 25 bekannter Art eingesetzt. Die Verbindung mit der Pumpe 1 erfolgt dann in bekannter Weise mittels Schrauben.

Es bleibt noch nachzutragen, daß die ebene, sich senkrecht zur geometrischen Achse 27 der Abtriebswelle 3 erstreckende Fläche der Sicke 20 eine Anflanschfläche 26 bildet. Die gesamte sickenartige Ausprägung hat im wesentlichen eine C-förmige Gestalt (Fig. 4), wobei der Zwischenraum zwischen den beiden C-Schenkelenden einen Abflußkanal 28 bildet. In Gebrauchslage ist er dem unteren Bereich einer Nut 29 im Topfboden 10 so zugeordnet, daß eventuell in der Nut befindliches Leckageöl über den Abflußkanal 28 vollständig abfließen kann. Die Nut 28 ist außen durch die ringförmige Sicke 20 und innen durch den Ansatz 6 begrenzt, wobei der Nutgrund ebenso wie der Grund des Abflußkanals 28 in der Ebene der Topfbodenaußenfläche gelegen ist. Der Fig. 4 ist im übrigen zu entnehmen, daß die innere Umfangslinie 30 der Ausprägung oder Sicke 20 etwa der äußeren Umfangslinie 31 des zapfenförmigen Ansatzes 6 im Bereich des Topfbodens 10 entspricht und somit auch die Nut 29 eine dementsprechende Form, in Umfangsrichtung gesehen, hat.

Mit gestrichelten Linien ist in den Fig. 4 und 5 angedeutet, daß der Ansatz 6 in einem an den lopfboden 10 anschließenden Abschnitt 90 innen und außen auch zylindirsch gestaltet sein kann, wobei der Außendurchmesser dem Außendurchmesser in den Bereichen außerhalb der Längsrillen 11 entspricht. Um einen derart modifizierten Ansatz 6 kann im zylindrischen Abschnitt 90 ein handelsüblicher O-Ring 91 gelegt werden, der zwischen dem Motorgehäuse 7 und einer Fase 92 der Pumpe 1 eingeklemmt wird. Auf diese Weise ist die Pumpe 1 im Bereich des Ansatzes 6 nach außen abgedichtet.

Der Topfrand 32 ist gemäß bspw. Fig. 1 nach außen umgebogen, um dadurch eine Anlagefläche für den Deckel 18 zu bilden. Außerdem sind an den Rand 32 zwei Augen 33 und 34 angeformt, welche eine Verbindung des Motorgehäuses 7 mit dem Deckel 18 über Schrauben 35 und 36 ermöglichen.

Der Deckel 18 besitzt, wie bereits erläutert, eine erste Aufnahme 17 fur das zweite Lager 16, die sich am inneren Ende einer zweiten rohrartigen Aufnahme 37 für einen Stützring 38 befindet bzw. sich in axialer Richtung daran anschließt. Der Stützring 38 ist in den Fig. 6 bis 8 detailliert dargestellt. Außerdem ergibt er sich selbstverständlich auch aus Fig. 1. Dort ist die Montageendlage des Stützrings 38 gezeichnet. Man erkennt, daß er zwischen dem zweiten Lager 16 für die Ankerwelle und dem Kommutator 39 der letzteren angeordnet ist. ln der nicht dargestellten Ausgangslage, welche der Stützring 38 bei losem Deckel 18 einnimmt, überdeckt er die innere Mündung 40 zweier in Umfangsrichtung versetzter Radialkanäle 41, von denen in Fig. 1 einer zu sehen ist. Dadurch hält er die in jedem Radialkanal 41 unter der Wirkung einer Belastungsfeder 42 stehende Kohle 43 nieder.

Weil der Kommutator 39 auf der Ankerwelle des Ankers 44 dreh- und schiebefest gehalten ist, trifft das kommutatorseitige Ende des Stützrings 38 mit seinen Stützgliedern 45 und 46 an der stützringseitigen Stirnfläche des Kommutators auf. Der Stützring 38 hat zu diesem Zeitpunkt vom zweiten Lager 16 noch einen axialen Abstand. Je mehr man den Deckel 18 an das Gehäuse 7 des Motors 2 annähert, umso weiter wird der Stützring 38 in die zweite Aufnahme 37 hineingeschoben, und umso mehr tritt das in Fig. 1 linke Ende der Ankerwelle in das zweite Lager 16 ein. Weil bei dieser Verschiebebewegung der Kommutator 39 ständig am Stützring 38 anliegt, übergreift der Kommutator 39 jede innere Mündung jedes Radialkanals 41 in dem Maße, in dem sie vom Stützring 38 freigegeben wird. Die Kohle 43 hat also keinerlei Möglichkeit, eine unkontrollierte Bewegung in ihrem Radialkanal durchzuführen, vielmehr ist es ihr bei vollständiger Freigabe durch den Stützring 38 lediglich möglich, nach Durchlaufen des geringen Spaltraums zwischen der inneren Mündung 40 und dem Kommutator 39 sich an letzteren anzulegen.

Der Stützring 38 ist in seiner Verschiebeendlage rüttelfest in der zweiten Aufnahme 37 gehalten. Außerdem kann er mit seiner kommutatorzugewandten Stirnfläche eine Abstützung für einen Anker bilden, der im Motorgehäuse mit einem Kalotten- oder Zylinderlager axialspielfrei gelagert ist.

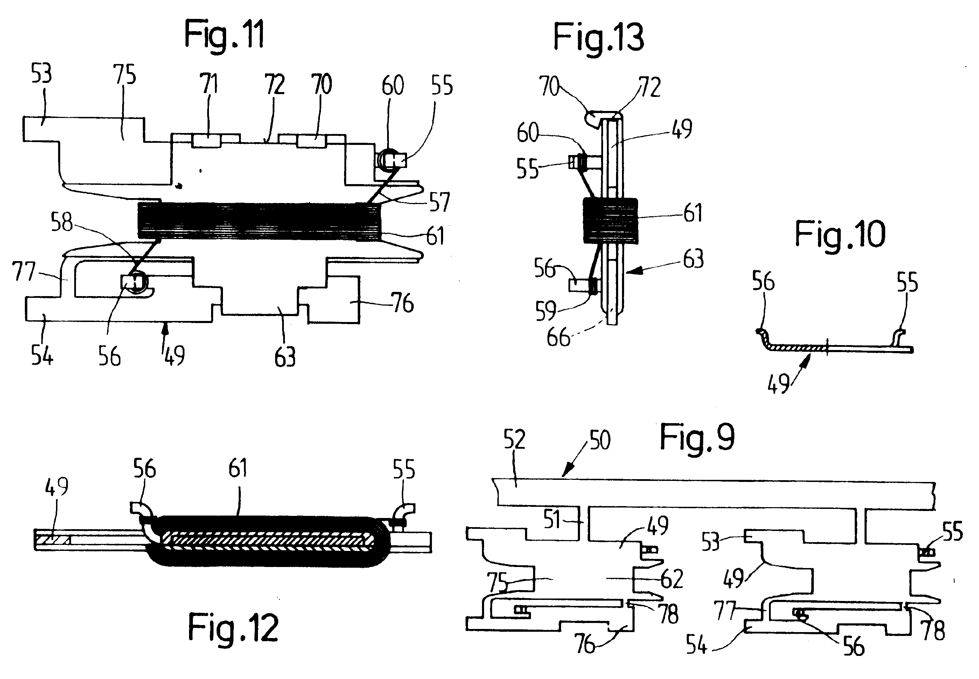

Beim genannten Anwendungsgebiet der aus Pumpe 1 und Elektromotor 2 bestehenden Einheit ist eine überwachung der Funktion des Elektromotors unerläßlich. Hierzu dient in vorteilhafter Weise ein Sensor 48. Er befindet sich an einem leistenartigen Ansatz 47 des Deckels 18. Wenn der Deckel in bevorzugter Weise aus Kunststoff hergestellt wird, so kann man den leistenartigen Ansatz 47 unmittelbar anformeri. Gemäß Fig. 1 ist der Sensor dem Anker 44 des Elektromotors zugeordnet. Den Fig. 9 bis 17 entnimmt man die einzelnen Elemente des Sensors 48 und damit indirekt auch die einzelnen Verfahrensschritte zur Herstellung dieses Sensors.

Ein wesentliches Element des Sensors ist ein Spulenkörper 49, der gemäß Fig. 9 aus einem Blechstreifen 50 ausgestanzt wird. In Fig. 9 sind die einzelnen Spulenkörper mittels eines Stegs 51 am verbleibenden Rest 52 des Blechstreifens gehalten.

Dieser Steg 51 wird anschließend noch entfernt. Am Spulenkörper 49 sind unmittelbar zwei erste Anschlußlappen 53 und 54 für den Sensor 48 und zwei zweite Anschlußlappen 55 und 56 für die elektrische Verbindung mit den beiden Spulenenden 57 und 58 angeformt. Während die ersten Anschlußlappen in der Blechebene verbleiben, werden die zweiten Anschlußlappen 55 und 56 gemäß Fig. 10 zweimal gegenläufig umgebogen. Dadurch läßt sich das jeweilige Spulenende 57 bzw. 58 in mehreren Windungen 59 bzw. 60 an seinem zweiten Anschlußlappen 55, 56 problemlos befestigen. Diese Verbindung wird mittels Lötzinn oder dgl. gesichert.

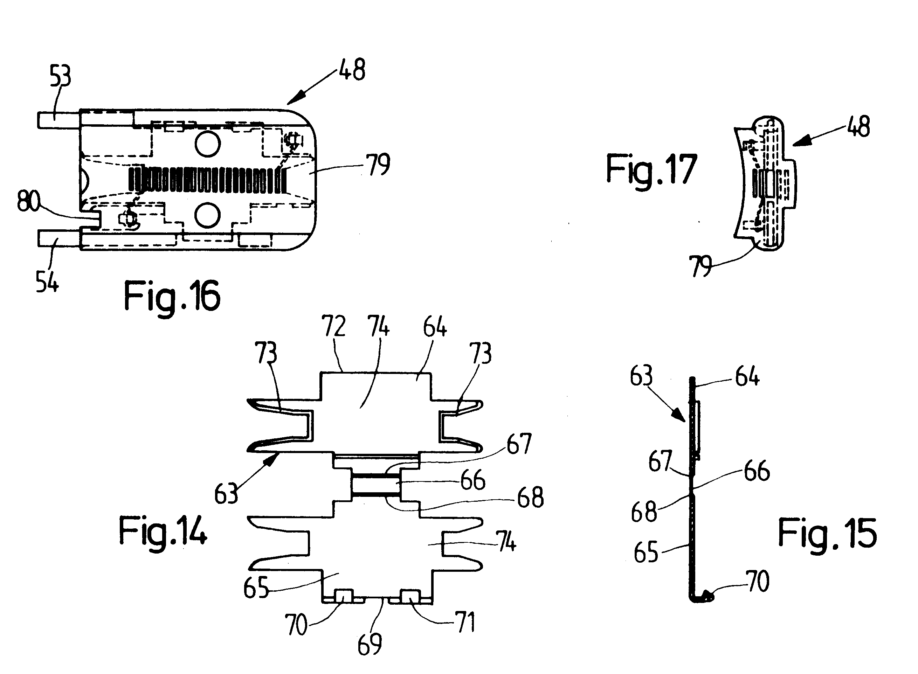

Der die Spule 61 aufnehmende Bereich 62 des Spulenkörper 49 ist von einer Kunststoffummantelung 63 umgeben. Deren genaue Form ergibt sich aus den Fig. 14 und 15, so wie die genaue Form des Spulenkörpers 49 vorzugsweise aus den Fig. 9 und 10 ergibt. Insbesondere aus Fig. 13, aber auch aus den Fig. 11 und 12, ersieht man, wie diese Kunststoffummantelung 63 den Spulenkörper 49 in seinem Bereich 62 umhüllt. Man sieht aber auch, daß diese Ummantelung sowohl die ersten Anschlußlappen 53 und 54 als auch die zweiten Anschlußlappen 55 und 56 frei läßt.

Die Kunststoffummantelung 63 besteht aus zwei im großen und ganzen gleichen, aber im Detail, wie nachfolgend noch erläutert wird, geringfügig voneinander abweichenden Hälften 64 und 65. Sie sind über einen Zwischensteg 66 miteinander verbunden. Die Verbindung des letzteren mit jeder seiner Hälften 64 bzw. 65 ergibt eine Klappachse 67 bzw. 68. Der Abstand der beiden Klappachsen entspricht etwa der Blechdicke des Spulenkörpers 49.

An einer zu den Faltstellen bzw. Klappachsen 67, 68 parallelen ersten Längskante 69 sind zwei hakenartige Verrastglieder 70 und 71 angeformt. Bei an den Spulenkörper anmontierter Kunststoffummantelung 63 übergreift jedes dieser hakenartigen Verrastglieder eine zweite Längskante 72, welche parallel zur ersten Längskante 69 verläuft.

Die eine Hälfte 64 des Kunststoffteils 63 ist zumindest im Bereich der Wicklung der Spule 61 mit einem Distanzrand 73 versehen, welcher der Kontur in diesem Bereich des Kunststoffteils 63 folgt. Die Höhe des Distanzrandes entspricht der Blechdicke des Spulenkörpers 49. Im übrigen entnimmt man vorzugseise Fig. 14, daß jede Hälfte 64 bzw. 65 des Kunststoffteils 63 eine etwa H-förmige Gestalt aufweist, wobei der H-Quersteg die Spule 61 aufnimmt.

Gemäß bspw. Fig. 9 besteht der ausgestanzte Spulenkörper 49 aus zwei ungleich großen Stücken 75 und 76. Fig. 11 entnimmt man, daß der eine der beiden Stege, nämlich der Steg 78, nach dem Anbringen der Kunststoffummantelung 63 und der Spule 61 entfernt ist. Damit besteht eine mechanische, aber auch eine elektrisch leitende Verbindung zwischen den beiden Stücken 75 und 76 lediglich noch über den Steg 77.

Die in Fig. 11 gezeigte Einheit aus dem Spulenkörper 49, seiner isolierenden Kunststoffummantelung 63 und der darauf angebrachten Spule 61 wird in einem weiteren Arbeitsgang mit einer isolierenden Ummantelung 79 aus Kunststoff umhüllt. Gemäß Fig. 16 ragen aus dieser Ummantelung 79 lediglich noch die beiden ersten Anschlußlappen 53 und 54 heraus, mit deren Hilfe der Sensor an eine Stromversorgung angeschlossen werden kann. Nach dem Anbringen der Ummantelung 79 ist ausreichend Stabilität vorhanden, um auch noch den letzten Steg, nämlich den Steg 77, zwischen den beiden Stücken 75 und 76 des Spulenkörpers zu entfernen. Fig. 16 zeigt eine dementsprechende Ausstanzung 80. Die beiden Anschlußlappen 53 und 54 sind mit je einer Anschlußleitung 81 verbunden, die zu einer Steckdose 82 des Deckels 18 führt. Auch diese Steckdose kann in vorteilhafter Weise einstückig an den Deckel angeformt werden.

In nicht gezeigter Weise kann in den Deckel 18 aufgrund des verwendeten Materials und seines Herstellungsverfahrens ohne weiteres auch eine Elektronikbox oder dgl. integriert werden. Es bleibt noch nachzutragen, daß man beim Anspritzen der Ummantelung 79 bereits berücksichtigen kann, daß anschließend noch der Steg 77 ausgestanzt werden muß und man infolgedessen an dieser Stelle die Ummantelung dünner ausführt bzw. eine entsprechende Ausnehmung in der Ummantelung vorsieht

## Patentansprüche

1. Mit einer Pumpe (1) verbundener Elektromotor (2), wobei das Gehäuse der Pumpe (1) eine zylindrische Einsteckaufnahme (5) für einen darin eingreifenden zapfenförmigen Ansatz (6) des Motorgehäuses (7) aufweist und wobei außerdem dieser Ansatz (6) das pumpenseitige erste Lager (8) des Motorankers (9) spielfrei aufnimmt und eine Durchtrittsöffnung (14) für die Anker- bzw. Motor-Abtriebswelle (3) aufweist, dadurch gekennzeichnet, daß das Gehäuse (7) des Motors (2) als topfförmiges Blech-Tiefziehteil ausgebildet ist, dessen pumpenabgewandte Topföffnung (19) mittels eines das zweite Lager (16) des Motorankers (9) aufnehmenden Deckels (18) verschlossen ist, und daß, in Umfangsrichtung gesehen, der Wandquerschnitt des über den Topfboden (10) axial vorstehenden Ansatzes (6) wellenartig, mäanderartig oder in ähnlicher Weise mit Längsrillen (11) versehen ausgebildet ist und er paßgenau in die Einstecköffnung (5) der Pumpe (1) eingreift.

2. Elektromotor mit Pumpe nach Anspruch 1, dadurch gekennzeichnet, daß der Ansatz (6) in einem sich an den Topfboden (10) anschließenden Abschnitt (90) außen rund ist.

3. Elektromotor mit Pumpe nach Anspruch 1 oder 2, dadurch gekennzeichnet, daß sich am Topfboden (10) des Gehäuses (7) eine den Ansatz (6) konzentrisch umgebende, nach außen ragende, ringförmige Sicke (20) mit etwa diamteral gegenüberliegenden integrierten Befestigungsaugen (21, 22) befindet, wobei die gesamte Ausprägung eine ebene Anflanschfläche (26) für das Pumpengehäuse bildet.

4. Elektromotor mit Pumpe nach Anspruch 3, dadurch gekennzeichnet, daß die Anflanschfläche (26) axial über eine Nut (29) des Topfbodens (10) vorsteht, die außen durch die ringförmige Sicke (20) und innen durch den Ansatz (6) begrenzt ist, wobei der Nutgrund vorzugsweise in der Ebene der Topfbodenaußenfläche gelegen ist.

5. Elektromotor mit Pumpe nach Anspruch 3 oder 4, dadurch gekennzeichnet, daß die innere Umfangslinie (30) der Ausprägung (20) etwa der äußeren Umfangslinie (31) des zapfenförmigen Ansatzes (6) entspricht und beide Umfangslinien in der Ebene der Anflanschfläche (26) einen etwa konstanten Abstand aufweisen.

6. Elektromotor mit Pumpe nach wenigstens einem der Ansprüche 3 bis 5, dadurch gekennzeichnet, daß die sickenartige Ausprägung (20) mit der Anflanschfläche (26) in der Art eines geschlitzten Ringes ausgebildet ist und dadurch eine im wesentlichen C-förmige Gestalt aufweist, wobei der Zwischenraum zwischen den C-Schenkelenden einen Abflußkanal (28) bildet und er in Gebrauchslage dem unteren Ende zugeordnet ist.

7. Elektromotor mit Pumpe nach wenigstens einem der vorhergehenden Ansprüche, dadurch gekennzeichnet, daß der Topfrand (32) nach außen umgebogen ist und eine Anlagefläche für den Deckel (18) bildet.

8. Elektromotor mit Pumpe nach wenigstens einem der vorhergehenden Ansprüche, dadurch gekennzeichnet, daß der Deckel eine erste Aufnahme (17) für das zweite Lager (16) aufweist, die sich am ankerabgewandten Ende einer rohrartigen Aufnahme (37) für einen darin verschiebbaren, von der Ankerwelle (3) durchsetzten Stützring (38) befindet, wobei der Stützring vor der Montage des Deckels (18) einen seitlichen Abstand vom zweiten Lager (16) aufweist, und daß der Stützring (38) in der Verschiebe-Ausgangslage am Deckel (18) gehaltene Kohlen (43) für die elektrisch leitende Verbindung mit dem Kommutator (39) des Ankers (44) in einer Montagestellung zurückhält und er bei der Deckelmontage zur Freigabe der Kohlen (43) durch den Kommutator (39) verschoben wird.

9. Elektromotor mit Pumpe nach Anspruch 8, dadurch gekennzeichnet, daß der Stützring (38) in der Verschiebe-Endlage ein kommutatorseitiges Stützglied für das zweite Lager (16) bildet und er in der Verschiebe-Endlage mittels Preßsitz in der zweiten Aufnahme (37) des Deckels (18) gehalten ist.

10. Elektromotor mit Pumpe, nach wenigstens einem der vorhergehenden Ansprüche, dadurch gekennzeichnet, daß sich am Deckel (18) ein Teistenartiger Ansatz (47) befindet, der in den Zwischenraum zwischen dem Anker (44) und der Topfwandung eingreift und an dem sich eine Aufnahme oder dgl. Befestigungseinrichtung für eine den Motor überwachenden Sensor (48) befindet.

11. Elektromotor mit Pumpe nach Anspruch 10, dadurch gekennzeichnet, daß der leistenartige Ansatz (47) einstückig mit dem Deckel (18) aus Kunststoff gefertigt ist.

12. Elektromotor mit Pumpe nach Anspruch 10 oder 11, dadurch gekennzeichnet, daß der Sensor (48) einen aus einem ebenen ausgestanzten Blechteil gefertigten Spulenkörper (49) aufweist, der mit zwei einstückigen ersten Anschlußlappen (53, 54) für den Sensor (48) und mit zwei zweiten Anschlußlappen (55, 56) für die Verbindung mit den beiden Spulenenden (57, 58) versehen ist.

13. Elektromotor mit Pumpe nach Anspruch 12, dadurch gekennzeichnet, daß die zweiten Anschlußlappen (55, 56) des Spulenkörpers (49) zur Bildung von Befestigungshaken jeweils zweimal gegenläufig umgebogen sind, wobei die freien Hakenenden insbesondere nach außen und nach entgegengesetzten Richtungen weisen.

14. Elektromotor mit Pumpe nach Anspruch 12 oder 13, dadurch gekennzeichnet, daß der die Spule (61) aufnehmende Bereich (62) des ausgestanzten Spulenkörpers (49) mit einer Kunststoffummantelung (63) versehen ist, welche die ersten (53, 54) und zweiten Anschlußlappen (55, 56) frei läßt.

15. Elektromotor mit Pumpe nach Anspruch 14, dadurch gekennzeichnet, daß die Kunststoffummantelung (63) aus einem faltbaren, der Form des ausgestanzten Spulenkörpers (49) im Bereich der Spule (61) angepaßten, im ungefalteten Zustand im wesentlichen ebenen Kunststoffteil besteht, wobei eine zur Faltstelle (67, 68) vorzugsweise parallele erste Längskante (69), zwei Verrastglieder (70, 71), insbesondere Verrasthaken, trägt, die in gefaltetem Zustand mit einer zur ersten parallelen zweiten Längskante (72) am gegenüberliegenden Ende verrasten bzw. diese umgreifen.

16. Elektromotor mit Pumpe nach Anspruch 14 oder 15, dadurch gekennzeichnet, daß das Kunststoffteil (63) aus zwei im wesentlichen identischen Hälften (64, 65) besteht, die über einen Zwischensteg (66) verbunden sind, wobei jede Verbindung des Zwischenstegs mit seiner zugeordneten Hälfte (64 bzw. 65) eine Klappachse (67, 68) bildet und der Abstand beider Klappachsen (67, 68) etwa der Blechdicke des Spulenkörpers (49) entspricht.

17. Elektromotor mit Pumpe nach Anspruch 16, dadurch gekennzeichnet, daß eine Hälfte (64) des Kunststoffteils (63) zumindest im Bereich der Wicklung der Spule (61) mit einem Distanzrand (73) versehen ist, dessen Höhe etwa der Blechdicke des Spulenkörpers (49) entspricht.

18. Elektromotor mit Pumpe nach Anspruch 16 oder 17, dadurch gekennzeichnet, daß jede Hälfte (64, 65) des Kunststoffteils (63) eine etwa H-förmige Gestalt aufweist, wobei der H-Quersteg (74) die Spule (61) aufnimmt.

19. Elektromotor mit Pumpe nach Anspruch 12, **dadurch** **gekennzeichnet**, daß der ausgestanzte Spulenkörper (49) aus zwei ungleich großen Stücken (75,76) besteht, von denen jedes einen ersten (53, 54) und einen zweiten Anschlußstecker (55, 56) aufweist.

20. Elektromotor mit Pumpe nach Anspruch 19, **dadurch gekennzeichnet**, daß die beiden Stücke (75, 76) des Spulenkörpers (49) vor der Fertigstellung über zwei unterbrochene Stege miteinander gekoppelt waren.

21. Elektromotor mit Pumpe nach Anspruch 20, **dadurch gekennzeichnet**, daß der Spulenkörper (49) mit der Spule (61) mit einer die ersten Anschlußstecker (53, 54) freilassenden, isolierenden Ummantelung (79) umhüllt ist.

22. Elektromotor mit Pumpe nach Anspruch 21, **dadurch gekennzeichnet**, daß die Ummantelung (79) eine Unterbrechung oberhalb eines der Stege (77, 78) aufweist.

23. Elektromotor mit Pumpe nach einem der Ansprüche 12 bis 22, **dadurch gekennzeichnet**, daß die ersten Anschlußstecker (53, 54) des Spulenkörpers (49) mit je einer Anschlußleitung (81) zu einer Steckdose (82) im Deckel (18) verbunden sind.

24. Elektromotor mit Pumpe nach einem der Ansprüche 12 bis 22, **dadurch gekennzeichnet**, daß die ersten Anschlußstecker (53,54) des Spulenkörpers direkt als Außenanschlüsse dienen.

## Claims

1. An electric motor (2) connected with a pump (1), wherein the housing of the pump (1) has a cylindrical insertion recess (5) which receives a tappet-shaped stud (6) of the motor housing (7), and wherein, in addition, the stud (6) encloses the first bearing (8), situated at the side of the pump, of the motor armature (9) free from play, the recess providing an aperture (14) for passage of the armature shaft or motor driven shaft (3),
**characterized** in that the housing (7) of the motor (2) is formed as a pot-shaped member deep drawn from a metal blank, the opening of the pot (19) facing away from the pump, is closed by a cover (18) receiving the second bearing (16) of the motor armature (9), and in that, seen in the circumferential direction, the cross section of the wall of the stud (6) which protrudes from the bottom of the pot (10) axially, is formed wave-like or meander-like and has longitudinal flutes (11) and which form-fittingly engages into the insertion recess (5) of the pump (1).

2. An electric motor connected with a pump as claimed in claim 1,
**characterized** in that the stud (6) is round at the outside in a section (90) adjacent to the bottom of the pot (10).

3. An electric motor connected with a pump as claimed in claim 1 or claim 2,
**characterized** in that at the bottom of the pot (10) of the housing (7) there is a ring-shaped bead (20) concentrically surrounding the stud (6) and protruding towards the outside, which bead comprises integral fixing eyes (21, 22) arranged approximately diametrically opposite each other, the whole embossed part forming a flat flange surface (26) for the pump housing.

4. An electric motor connected with a pump as claimed in claim 3,
**characterized** in that from the flange surface (26) axially protrudes a groove (29) of the bottom of the pot (10), which groove is limited by the ring-shaped bead (20) at the outside and by the stud (6) at the inside, the bottom of the groove being preferably situated in the plane of the outer surface of the bottom of the pot.

5. An electric motor connected with a pump as claimed in claim 3 or claim 4,
**characterized** in that the inner line of the circumference (30) of the bead (20) corresponds approximately to the outer line of the circumference (31) of the tappet-shaped stud (6), and that both lines of circumference show an approximately constant distance in the plane of the flange surface (26).

6. An electric motor connected with a pump as claimed in at least one of the claims 3 to 5,
**characterized** in that the bead (20) with the flange surface (26) is formed in the way of a slitted ring and, therefore, substantially shows a C-shaped form, the space between the end of the C-legs forming a drain channel (28) and being directed to the lower end, during operation position.

7. An electric motor connected with a pump as claimed in at least one of the preceding claims,
**characterized** in that the edge of the pot (32) is bent towards the outside and forms a support area for the cover (18).

8. An electric motor connected with a pump as claimed in at least one of the preceding claims,
**characterized** in that the cover comprises a first recess (17) for the second bearing (16), which recess is situated at the end turned away from the armature of a pipe-like recess (37) for a shift support ring (38) which is penetrated by the armature shaft (3), the support ring showing a lateral distance of the second bearing (16), before the assembly of the cover (18), and in that the support ring (38) retains carbon brushes (43) in the shift home position held on the cover (18) for the electric connection with the commutator (39) of the armature (44) in an assembly position and is shifted by the commutator (39) during the assembly of the cover for releasing the carbon brushes (43).

9. An electric motor connected with a pump as claimed in claim 8,
**characterized** in that the support ring (38) forms a support member at the side of the commutator for the second bearing (16) in the shift end position by a press fit in the second recess (37) of the cover (18).

10. An electric motor connected with a pump as claimed in at least one of the preceding claims,
**characterized** in that there is a rail-like stud (47) at the cover (18), which stud engages in the space between the armature (44) and the wall of the pot, and at which stud (a recess or a similar fixing facility for a sensor (48) controlling the motor is situated.

11. An electric motor connected with a pump as claimed in claim 10,
**characterized** in that the rail-like stud (47) is integrally made from plastic with the cover (18).

12. An electric motor connected with a pump as claimed in claim 10 or claim 11,
**characterized** in that the sensor (48) comprises a coil body (49) made from a flat punched out metal sheet, which coil body is provided with two integrally made first connecting tabs (53, 54) for the sensor (48) and with two second connection tabs (55, 56) for connecting with the two coil ends (57, 58).

13. An electric motor connected with a pump as claimed in claim 12,
**characterized** in that the second connecting tabs (55, 56) of the coil body (49) for forming fixing hooks are bent twice in opposite directions, the free hook ends being directed especially towards the outside and to opposite directions.

14. An electric motor connected with a pump as claimed in claim 12 or claim 13,
**characterized** in that the section (62) of the punched coil body (49) receiving the coil (61) is supplied with a plastic coating (63) which leaves out the first (53, 54) and second connecting tabs (55, 56).

15. An electric motor connected with a pump as claimed in claim 14,
**characterized** in that the plastic coating (63) consists of a plastic part, which can be folded and is fitted to the shape of the punched coil body (49) in the section of the coil (61) and which is, if unfolded, substantially flat, and wherein a first longitudinal edge (69), preferably parallel to the folding axes (67, 68), carries two locking members (70, 71), more particularly locking hooks, which when folded, lock with a second longitudinal edge (72) running parallel to the first longitudinal edge (69) at the opposite end.

16. An electric motor connected with a pump as claimed in claim 14 or claim 15,
**characterized** in that the plastic coating (63) consists of two substantially identical halves (64, 65), which are connected by an intermediate web (66), each connection of the intermediate web with its respective half (64 and 65) forming a folding axis (67, 68) and the distance between the two folding axes (67, 68) approximately corresponding to the thickness of the metal sheet of the coil body (49).

17. An electric motor connected with a pump as claimed in claim 16,
**characterized** in that one half (64) of the plastic coating (63) is provided with a spaced edge (73) at least in the section of the winding of the coil (61), the height of which spaced edge (73) approximately corresponds to the thickness of the metal-sheet of the coil body (49).

18. An electric motor connected with a pump as claimed in claim 16 or claim 17,
**characterized** in that each half (64, 65) of the plastic coating (63) is approximately H-shaped, the H-web (74) receiving the coil (61).

19. An electric motor connected with a pump as claimed in claim 12,
**characterized** in that the punched coil body (49) consists of two pieces (75, 76), different in size, each of which pieces comprises a first connecting tab (53, 54) and a second connecting tab (55, 56).

20. An electric motor connected with a pump as claimed in claim 19,
**characterized** in that the two pieces (75, 76) of the coil body (49), prior to the completion, were interconnected by two interrupted webs.

21. An electric motor connected with a pump as claimed in claim 20,
**characterized** in that the coil body (49) is surrounded by an insulating coating (79), leaving out the first connecting tabs (53, 54).

22. An electric motor connected with a pump as claimed in claim 21,
**characterized** in that the coating (79) has an interruption above one of the webs (77, 78).

23. An electric motor connected with a pump as claimed in any one of the claims 12 to 22,
**characterized** in that the first connecting tabs (53, 54) of the coil body (49) are connected with a connecting wire (81) leading to a plug (82) in cover (18).

24. An electric motor connected with a pump as claimed in any one of the claims 12 to 22,
**characterized** in that the first connecting tabs (53, 54) of the coil body directly serve as outer terminals.

## Revendications

1. Moteur électrique (2) raccordé à une pompe (1), dont le carter possède un logement cylindrique d'enfichage (5) pour un appendice saillant en forme d'embout (6) du carter (7) du moteur et qui loge en outre sans jeu le premier palier (8), situé du côté de la pompe, de l'induit (9) du moteur et possède une ouverture de passage (14) pour l'arbre mené (3) de l'induit ou du moteur, caractérisé en ce que le carter (7) du moteur (2) est réalisé sous la forme d'une pièce en tôle emboutie en forme de pot, dont l'ouverture (19), tournée à l'opposé de la pompe, est fermée par un couvercle (18), qui loge le second palier (16) de l'induit (9) du moteur et que, lorsqu'on regarde dans la direction circonférentielle, la section transversale de paroi de l'appendice saillant (6), qui fait saillie axialement par rapport au fond (10) du pot, est agencée avec une forme ondulée ou une forme sinueuse ou comporte, de façon analogue; des nervures longitudinales (11) et s'engage, d'une manière ajustée de façon précise, dans l'ouverture d'enfichage (5) de la pompe (1).

2. Moteur électrique comportant une pompe selon la revendication 1, caractérisé en ce que l'appendice saillant (6) est cylindrique extérieurement au niveau d'une section (90) se raccordant au fond (10) du pot.

3. Moteur électrique comportant une pompe selon la revendication 1 ou 2, caractérisé en ce que sur le fond (10) du pot du carter (7) est disposée une moulure annulaire (20), qui fait saillie vers l'extérieur, entoure concentriquement l'appendice saillant (6) et comporte des oeillets de fixation intégrés (21,22), qui sont approximativement diamétralement opposés, l'ensemble de la partie moulurée formant une bride plane de raccordement (26) pour le carter de la pompe.

4. Moteur électrique comportant une pompe selon la revendication 3, caractérisé en ce que la bride de raccordement (26) fait saillie axialement par rapport à une rainure (29) du fond (10) du pot, qui est limitée extérieurement par la moulure de forme annulaire (20) et intérieurement par l'appendice saillant (6), le fond de la rainure étant situé de préférence dans le plan de la surface extérieure du fond du pot.

5. Moteur électrique comportant une pompe selon la revendication 3 ou 4, caractérisé en ce que la ligne circonférentielle intérieure (30) de la partie moulurée (20) correspond approximativement à la ligne circonférentielle extérieure (31) de l'appendice saillant en forme d'embout (6) et que les deux lignes circonférentielles sont séparées par une distance approximativement constante dans le plan de la surface de raccordement (26).

6. Moteur électrique comportant une pompe selon au moins l'une des revendications 3 à 5, caractérisé en ce que la partie moulurée (20) en forme de moulure pourvue de la bride de raccordement (26) est agencée à la manière d'une bague fendue et possède de ce fait une configuration essentiellement en forme de C, l'espace intercalaire entre les extrémités des branches du C formant un canal d'évacuation (28) et dans la position d'utilisation, il est associé à l'extrémité inférieure.

7. Moteur électrique comportant une pompe selon au moins l'une des revendications précédentes, caractérisé en ce que le bord (32) du pot est replié vers l'extérieur et forme une surface d'application pour le couvercle (18).

8. Moteur électrique comportant une pompe selon au moins l'une des revendications précédentes, caractérisé en ce que le couvercle possède un premier logement (17) pour le second palier (16), qui est situé sur l'extrémité, tournée à l'opposé de l'induit, d'un logement de forme tubulaire (37) pour une bague d'appui (38) déplaçable à l'intérieur de ce logement et traversée par l'arbre (3) de l'induit, la bague d'appui étant séparée par une certaine distance latérale, du second palier (16) avant le montage du couvercle (18), et que dans la position initiale décalée, la bague d'appui (38) retient des charbons (43) fixés sur le couvercle (18), pour la liaison électriquement conductrice avec le collecteur (39) de l'induit (44), dans une position de montage et que lors du montage du couvercle, on déplace la bague pour libérer les charbons (43) au moyen du collecteur (39).

9. Moteur électrique comportant une pompe selon la revendication 8, caractérisé en ce que la bague d'appui (38) forme, dans la position finale de déplacement, un organe d'appui, situé du côté du collecteur, pour le second palier (16) et, dans la position finale de décalage, elle est retenue au moyen d'un ajustement serré dans le second logement (37) du couvercle (18).

10. Moteur électrique comportant une pompe selon au moins l'une des revendications précédentes, caractérisé en ce que sur le couvercle (18) est situé un appendice saillant (47) en forme de barrette, qui s'engage dans l'espace intercalaire présent entre l'induit (44) et la paroi du pot et dans lequel est présent un logement ou un dispositif de fixation analogue pour un capteur (48) contrôlant le moteur.

11. Moteur électrique comportant une pompe selon la revendication 10, caractérisé en ce que l'appendice saillant en forme de barrette (47) est fabriqué d'un seul tenant avec le couvercle (18), en matière plastique.

12. Moteur électrique comportant une pompe selon la revendication 10 ou 11, caractérisé en ce que le capteur (48) possède un corps de bobine (49) formé d'une pièce en tôle plane découpée et qui est pourvu de deux premières pattes de raccordement (53,54), formées d'un seul tenant, pour le capteur (48) et de deux secondes pattes de raccordement (55,56) pour la liaison avec les deux extrémités (57,58) de la bobine.

13. Moteur électrique comportant une pompe selon la revendication 12, caractérisé en ce que les secondes pattes de raccordement (55,56) du corps de bobine (49) sont repliées respectivement deux fois en sens opposé pour la formation de crochets de fixation, les extrémités libres des crochets étant dirigées notamment vers l'extérieur et dans des directions opposées.

14. Moteur électrique comportant une pompe selon la revendication 12 ou 13, caractérisé en ce que la partie (62), qui loge la bobine (61), du corps de bobine découpé (49) est pourvue d'une gaine en matière plastique (63), qui libère les premières pattes de raccordement (53,54) et les secondes pattes de raccordement (55,56).

15. Moteur électrique comportant une pompe selon la revendication 14, caractérisé en ce que la gaine en matière plastique (63) est constituée par une pièce en matière plastique pliable, qui est adaptée à la forme du corps de bobine découpé (49) au voisinage de la bobine (61) et est essentiellement plane à l'état non plié, un premier bord longitudinal (69), qui est de préférence parallèle à la zone de pliage (67,68), portant deux organes d'encliquetage (70,71), notamment des crochets d'encliquetage, qui, à l'état replié, s'encliquettent sur un second bord longitudinal (72) parallèle au premier bord, sur l'extrémité opposée, ou enserrent ce second bord.

16. Moteur électrique comportant une pompe selon la revendication 14 ou 15, caractérisé en ce que la pièce en matière plastique (63) est constituée de deux moitiés essentiellement identiques (64,65), qui sont reliées par l'intermédiaire d'une barrette intermédiaire (66), chaque liaison de la barrette intermédiaire avec la moitié (64 ou 65) qui lui est associée formant un axe de basculement (67,68), et la distance des deux axes de basculement (67,68) correspondant approximativement à l'épaisseur de la tôle du corps de bobine.

17. Moteur électrique comportant une pompe selon la revendication 16, caractérisé en ce qu'une moitié (64) de la pièce en matière plastique (63) comporte, au moins au voisinage de l'enroulement de la bobine (61), un bord d'entretoisement (73), dont la hauteur correspond approximativement à l'épaisseur de la tôle du corps de bobine.

18. Moteur électrique comportant une pompe selon la revendication 16 ou 17, caractérisé en ce que chaque moitié (64,65) de la pièce en matière plastique (63) possède une configuration approximativement en forme de H, la barrette transversale (74) du H portant la bobine (61).

19. Moteur électrique comportant une pompe selon la revendication 12, caractérisé en ce que le corps de bobine découpé (49) est constitué de deux parties (75,76) ayant des tailles différentes et dont chacune possède un premier connecteur de raccordement (53,54) et un second connecteur de raccordement (55,56).

20. Moteur électrique comportant une pompe selon la revendication 19, caractérisé en ce que les deux parties (75,76) du corps de bobine (49) sont accouplées entre elles par l'intermédiaire de deux barrettes ininterrompues, avant la finition.

21. Moteur électrique comportant une pompe selon la revendication 20, caractérisé en ce que le corps de bobine (49) équipé de la bobine (61) est enveloppé par une enveloppe isolante (79), qui laisse à nu le premier connecteur de raccordement (53,54).

22. Moteur électrique comportant une pompe selon la revendication 21, caractérisé en ce que l'enveloppe (79) possède une interruption au-dessus de l'une des barrettes (77,78).

23. Moteur électrique comportant une pompe selon l'une des revendications 12 à 22, caractérisé en ce que les premiers connecteurs de raccordement (53,54) du corps de bobine (49) sont reliés respectivement à un conducteur de raccordement (81) aboutissant à une prise femelle (82) située dans le couvercle (18).

24. Moteur électrique comportant une pompe selon l'une des revendications 12 à 22, caractérisé en ce que les premiers connecteurs de raccordement (53,54) du corps de bobine sont utilisés directement en tant que bornes extérieures.
